# FASCICULE DE BREVET EUROPEEN

(11) **EP 1 358 406 B1**
(45) Date de publication et mention de la délivrance du brevet: **23.08.2006**
(21) Numéro de dépôt: 02702262.3
(22) Date de dépôt: 14.01.2002
(51) Int. Cl.: F02P 15/08, F02D 41/40, F02D 37/02

(54) **PROCEDE ET DISPOSITIF DE REGLAGE DE L'INSTANT D'OUVERTURE D'UN INJECTEUR DE CARBURANT, POUR MOTEUR A COMBUSTION INTERNE A INJECTION DIRECTE**
VERFAHREN UND EINSTELLVORRICHTUNG DES ZEITPUNKTES DER ÖFFNUNG EINER TREIBSTOFFEINSPRITZPUMPE FÜR DIREKT EINGESPRITZTE VERBRENNUNGSMOTOREN
METHOD AND DEVICE FOR ADJUSTING OPENING TIME OF A FUEL INJECTOR, FOR MOUNTING A DIRECT INJECTION INTERNAL COMBUSTION ENGINE

(30) Priorité: 05.02.2001 FR 0101503
(43) Date de publication de la demande: 05.11.2003
(73) Titulaire: Siemens VDO Automotive S.A.S., 31036 Toulouse Cédex 01 (FR)
(72) Inventeur: DIETL, Franz, 93053 Regensburg (DE); RUKWID, Holger, F-31270 Frouzins (FR); GALTIER, Frédéric, F-34070 Montpellier (FR)
(86) Numéro de dépôt international: PCT/EP2002/000282
(87) Numéro de publication internationale: WO 2002/063164

(56) Documents cités:
- EP-A- 0 652 363
- EP-A- 0 893 600
- US-A- 5 038 744
- US-A- 5 875 761
- US-A- 6 032 650

## Description

La présente invention est relative à un procédé de réglage de l'instant d'ouverture d'un injecteur de carburant dans un cylindre d'un moteur à combustion interne à injection directe.

Dans un moteur de ce type, notamment ceux fonctionnant en mode de combustion "stratifié", il est important que le carburant entrant dans la composition du mélange air/carburant à brûler dans les cylindres du moteur, soit introduit dans chaque cylindre à un moment choisi de manière que ce mélange atteigne précisément les électrodes d'une bougie d'allumage du mélange au moment où celles-ci émettent une étincelle. C'est à ce prix que l'on peut assurer une bonne combustion du mélange et, en particulier, une protection efficace contre un éventuel raté de combustion.

Il faut alors consacrer des efforts importants au réglage de l'instant d'ouverture de l'injecteur avant de mettre en service un tel moteur, soit avant de mettre en circulation un véhicule automobile propulsé par ce moteur, par exemple.

Ce réglage est rendu nécessaire par d'inévitables tolérances de fabrication affectant divers organes du moteur ou associés à celui-ci. En outre, pendant la durée de vie du moteur, le réglage de l'instant d'ouverture peut subir des dérives, ou exiger des adaptations dues, par exemple, au vieillissement des organes précités.

On peut surmonter ces difficultés en allongeant la durée pendant laquelle une étincelle est susceptible d'initier la combustion du mélange, ou en multipliant les étincelles d'allumage de manière qu'au moins l'une d'elles soit présente au moment où le mélange à brûler atteint les électrodes de la bougie d'allumage.

Ces dispositions ont malheureusement pour effet d'abréger la durée de vie utile de la bougie, ce qui entraîne de coûteux remplacements de celle-ci.

En outre, l'instant d'allumage effectif du mélange restant alors inconnu, le calculateur qui gère classiquement le fonctionnement du moteur n'est pas en mesure d'évaluer précisément le couple délivré par ce moteur. Des stratégies de commande du moteur fondées sur la connaissance de ce couple (suppression d'à-coups de couple, réduction rapide du couple lors d'un changement de rapport de boîte de vitesses, par exemple) sont alors difficiles, voire impossibles à mettre en oeuvre.

La présente invention a précisément pour but de fournir un procédé de réglage de l'instant d'ouverture d'un injecteur de carburant dans un cylindre de moteur à combustion interne à injection directe, qui ne souffre pas des inconvénients évoqués ci-dessus et qui, en particulier, permette d'allonger la durée de vie des bougies d'allumage du moteur, de maximiser et d'estimer avec précision le couple délivré par celui-ci, tout en permettant une adaptation aisée du moteur à la production de ces résultats.

On atteint ce but de l'invention, ainsi que d'autres qui apparaîtront à la lecture de la description qui va suivre, avec un procédé de réglage de l'instant d'ouverture d'un injecteur de carburant dans au moins un des cylindres d'un moteur à combustion interne à injection directe, remarquable en ce que a) on émet une série d'étincelles dans ledit cylindre, rempli d'un mélange air/carburant à enflammer, à des instants successifs prédéterminés, b) on identifie celle desdites étincelles qui initie l'allumage dudit mélange, c) on évalue l'écart séparant l'instant d'émission de ladite étincelle d'un instant d'allumage prédéterminé propre à assurer la fourniture par ledit moteur d'une puissance mécanique prédéterminée, et d) on corrige l'instant d'ouverture dudit injecteur de carburant en fonction dudit écart, de manière à initier des allumages ultérieurs du mélange air/carburant dans ledit cylindre audit instant prédéterminé.

Comme on le verra plus loin en détails, grâce à cette correction on peut ensuite déclencher, avec une seule étincelle, la combustion du mélange air/carburant dans le cylindre de manière qu'elle s'étende sur un intervalle de temps choisi pour que le moteur produise alors une performance prédéterminée, en matière de couple délivré par exemple. On peut ainsi régler l'instant d'ouverture de l'injecteur de manière que le couple délivré soit maximal, par exemple, pour un régime et une charge donnée du moteur.

L'invention fournit également un dispositif pour la mise en oeuvre de ce procédé, comprenant a) des moyens propres à émettre une série d'étincelles dans le cylindre du moteur quand celui-ci est rempli d'un mélange air/carburant à enflammer, b) des moyens pour détecter l'inflammation dudit mélange et délivrer un signal correspondant, et c) des moyens de calcul sensibles audit signal et propres à commander, d'une part, lesdits moyens d'émission de ladite série d'étincelles de manière que lesdites étincelles soient émises à des instants respectifs prédéterminés et, d'autre part, l'instant d'ouverture dudit injecteur de carburant dans ledit cylindre du moteur, en fonction des informations contenues dans ledit signal.

D'autres caractéristiques et avantages de la présente invention apparaîtront à la lecture de la description qui va suivre et à l'examen du dessin annexé dans lequel :
- la figure 1 est un schéma d'un dispositif permettant la mise en oeuvre du procédé suivant l'invention,
- la figure 2 est un graphe illustrant le procédé suivant l'invention, et
- la figure 3 est un graphe illustrant une variante du procédé suivant l'invention.

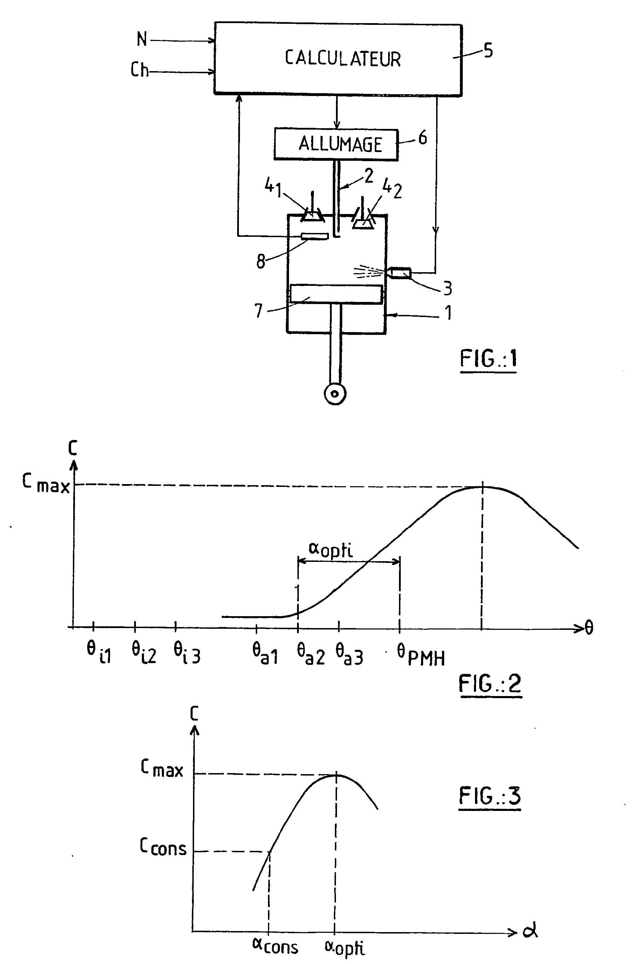

On se réfère à la figure 1 du dessin annexé où l'on a représenté schématiquement un cylindre 1 formant partie d'un moteur à combustion interne, plus particulièrement du type à injection directe. Un tel cylindre est équipé d'une bougie d'allumage 2, d'un injecteur de carburant 3 débouchant sur la paroi interne du cylindre 1 et de plusieurs soupapes (d'admission ou d'échappement) telles que celles référencées 4₁, 4₂, comme cela est bien connu.

Un calculateur 5 de gestion du fonctionnement du moteur est dûment programmé pour commander l'instant d'ouverture et la durée d'ouverture de l'injecteur 3 ainsi que l'instant d'émission d'une étincelle par la bougie d'allumage 2.

Suivant la présente invention, le dispositif comprend encore un module d'allumage 6, connu en lui-même, permettant d'assurer sélectivement, sous la commande du calculateur 5, l'émission par la bougie d'une étincelle ou de plusieurs étincelles successives, chacune de ces étincelles étant émise en correspondance avec un "angle d'avance" prédéterminé mesuré par rapport au point mort haut (PMH) d'un piston 7 circulant dans le cylindre 1, en fin de phase de compression d'un mélange d'air et de carburant préalablement introduit dans ce cylindre par une commande appropriée de l'injecteur 3 et des soupapes 4₁, 4₂.

Suivant la présente invention, le dispositif comprend en outre des moyens de détection de la combustion du mélange air/carburant. On sait que cette combustion, initiée par une étincelle émise par la bougie, provoque une forte élévation de la pression et de la température du mélange, cette combustion pouvant ainsi être détectée à l'aide d'un capteur 8 sensible soit à la pression régnant dans le cylindre, soit à l'ionisation des gaz contenus dans le cylindre, sous l'effet de l'élévation de la température de ces gaz. En variante ce capteur 8, placé de préférence au voisinage de la bougie, pourrait être remplacé par une "relecture" du courant passant dans la bougie 2, après l'émission de l'étincelle, ce courant étant évidemment fonction de l'ionisation du gaz présent entre les électrodes de cette bougie.

On se réfère maintenant au graphe de la figure 2 pour décrire le procédé de réglage de l'instant d'ouverture de l'injecteur 3, mis en oeuvre à l'aide du dispositif de la figure 1.

Sur ce graphe on a représenté l'évolution du couple délivré par un des cylindres du moteur, pendant la combustion du mélange air/carburant introduit dans ce cylindre, ce couple étant représentatif de la puissance mécanique de sortie du moteur. Comme cela est bien connu, les événements qui se succèdent pour aboutir à cette combustion : ouverture de l'injecteur 3, émission d'une étincelle par la bougie 2, interviennent à des instants qui sont repérés par un angle de rotation θ, celui atteint par le vilebrequin du moteur dont on sait qu'il tourne de 720° lors d'un "cycle moteur" complet, dans le cas- d'un moteur à combustion interne à quatre temps, par exemple. Plus particulièrement, l'instant auquel intervient l'émission d'une étincelle d'allumage est repéré par "l'angle d'avance à l' allumage" αₐₗₗ, égal à la "distance" angulaire séparant cet instant de celui du passage du piston 7 à son point mort haut PMH, passage repéré par la position angulaire θ_{PMH}, correspondante du vilebrequin, mécaniquement lié à ce piston.

D'une manière générale, dans le domaine de la commande d'un moteur à combustion interne, l'écart séparant deux événements successifs peut être évalué soit par un "écart angulaire", soit par un "écart temporel" ces deux expressions devant être considérées comme interchangeables dans la présente description.

Comme l'illustre le graphe de la figure 2, pendant la phase de combustion du mélange air/carburant, le couple délivré au vilebrequin par le piston 7 du cylindre 1 croît pour atteindre un maximum Cₘₐₓ, après le point mort haut θ_{PMH} du piston 7. Le couple moyen alors délivré pendant la combustion est avantageusement maximisé par l'initiation de la combustion à un angle d'avance à l'allumage "optimal" αₒₚₜᵢ. Cet angle, fonction de la charge Ch et du régime N du moteur, est calculé par le calculateur 5 qui peut donc commander en conséquence l'excitation de la bougie 3.

L'angle αₒₚₜᵢ peut, avantageusement, être corrigé pour atteindre le meilleur compromis possible entre la nécessité de maximiser le couple, tout en minimisant les rejets de gaz d'échappement nocifs dans l'atmosphère.

Pour que la phase de combustion du mélange air/carburant se développe idéalement, de la manière décrite ci-dessus, il convient que la région du nuage de mélange air/carburant injecté dans le cylindre qui atteint les électrodes de la bougie soit alors dans des conditions de pression, de température et de concentration en carburant déterminés, propres à assurer un allumage fiable de ce mélange.

Dans le cas d'un moteur à injection directe, notamment à combustion stratifiée, il faut un certain temps pour que ces conditions soient atteintes. Il est donc nécessaire que l'ouverture de l'injecteur de carburant précède l'excitation de la bougie (au passage du vilebrequin à la position θₐ₂, sur la figure 2) d'un intervalle de temps correspondant à un écart angulaire prédéterminé qui définit l'angle θᵢ₂ du vilebrequin auquel cette ouverture doit être déclenchée.

Du fait des tolérances de fabrication qui affectent la précision des performances d'un moteur et qui, par conséquent, font dériver les performances d'un moteur particulier par rapport aux performances nominales, il peut arriver qu'à l'angle d'avance nominal fixé pour l'allumage, les conditions idéales d'allumage évoquées ci-dessus ne soient pas réunies, ce qui peut provoquer des instabilités du couple délivré par le moteur, ou même des ratés de combustion. C'est pourquoi avant la mise en service d'un moteur, celui-ci passe par une étape de réglage (dite de "calibrage").

Une situation analogue peut se retrouver tout au long de la durée de vie du moteur, du fait des dérives et des usures qui affectent dans le temps le fonctionnement de ce moteur.

Suivant la présente invention, on pallie ces inconvénients en mettant en oeuvre le procédé de réglage de l'instant d'ouverture de l'injecteur de carburant suivant la présente invention, ce procédé permettant d'assurer un "auto-réglage" du moteur, aussi bien avant la mise en service du moteur que tout au long de sa durée de vie utile, comme on le verra plus loin.

Ce réglage consiste à tester, par exemple périodiquement et automatiquement, la capacité du mélange air/carburant à s'enflammer à l'instant optimal prédéterminé, soit lorsque l'angle de rotation du vilebrequin atteint la valeur θₐ₂, après être passé à la valeur nominale θᵢ₂ de l'angle d'ouverture de l'injecteur 3. L'écart angulaire (θₐ₂ - θᵢ₂) est ainsi ajusté à une valeur nominale laissant juste assez de temps au nuage de carburant introduit dans le cylindre pour atteindre les électrodes de la bougie 2 avec une pression, une température, et une teneur en carburant de l'air environnant les électrodes, propres à assurer l'initiation de la combustion du mélange air/carburant à l'instant de l'apparition d'une étincelle entre les électrodes de la bougie, soit au moment où l'angle de rotation du vilebrequin atteint la valeur θₐ₂.

Suivant l'invention, pour exécuter ce test, le calculateur 5 commande le module d'allumage 6 de manière que celui-ci émette une série d'étincelles à des instants successifs prédéterminés correspondant par exemple à des angles de rotation θₐ₁, θₐ₂, θₐ₃ du vilebrequin, les angles θₐ₁ et θ₃ encadrant, de préférence, l'angle d'émission θₐ₂ de l'étincelle nominale.

Grâce au signal émis par le capteur 8, ou à une relecture du courant passant dans la bougie, comme on l'a vu plus haut, le calculateur est informé de l'état du mélange air/carburant après l'émission de chaque étincelle, à savoir si ce mélange est enflammé ou non.

Si le calculateur reconnaît alors, par exemple, que l'inflammation du mélange est due à l'étincelle émise à l'angle θₐ₁, c'est-à-dire à une étincelle émise avant l'étincelle nominale(d'angle θₐ₂), il en déduit que le nuage de carburant est arrivé prématurément sur les électrodes de la bougie. Le calculateur 5 retarde alors, pour les phases de combustion suivantes, l'injection du carburant de manière à retarder de manière correspondante l'instant d'inflammation possible du mélange air/carburant jusqu'à l'instant nominal préféré (angle θₐ₂). L'amplitude Δt de ce retard est réglé à la valeur du temps mis par le vilebrequin pour passer de l'angle θₐ₁ à l'angle θₐ₂, valeur que le calculateur 5 peut facilement établir à partir de la valeur du régime N du moteur.

Dans le cas où, au contraire, c'est l'étincelle émise à l'angle θₐ₃ qui initie la combustion du mélange, alors que les étincelles antérieures émises à θₐ₁ et θₐ₂ n'ont rien donné, le calculateur 5 avance l'ouverture de l'injecteur 3 à l'instant correspondant à l'angle θᵢ₁, l'amplitude de cette avance étant calculée comme indiqué ci-dessus.

L'invention permet donc de recentrer la phase de combustion du mélange air/carburant sur l'intervalle de temps qui, pour un régime N et une charge Ch donnée du moteur, permet à celui-ci de produire un couple maximal, au bénéfice du rendement de ce moteur.

Il apparaît maintenant que l'invention apporte d'autres avantages :
- elle permet d'allonger la durée de vie de la bougie utilisée, par rapport à celle d'une bougie produisant systématiquement plusieurs étincelles dans la partie initiale de chacune des phases de combustion du mélange air/carburant. En effet une fois le réglage de l'instant d'ouverture de l'injecteur exécuté comme décrit ci-dessus, une seule étincelle seulement reste nécessaire pour assurer l'allumage des mélanges air/carburant qui se succèdent dans chaque cylindre du moteur.
- elle permet au calculateur d'évaluer avec précision le couple délivré par le moteur, grâce au réglage précis de l'instant d'allumage du mélange dont la combustion produit ce couple.

En, outre le procédé de réglage suivant l'invention s'adapte aisément à toutes les phases de la vie du moteur. En effet il peut être introduit dans la procédure de "calibrage" du moteur exécutée classiquement avant la mise en service de celui-ci. Il peut aussi être exécuté périodiquement par le calculateur de gestion du moteur, tout au long de la durée de vie de ce moteur, pour corriger les dérives éventuelles dues à des déréglages d'organes ou à l'usure de ceux-ci.

Egalement le procédé suivant l'invention peut être appliqué individuellement à chacun des cylindres du moteur, au bénéfice du rendement global de ce dernier.

En variante du mode de réalisation décrit ci-dessus du procédé suivant l'invention, le calculateur peut commander l'émission d'étincelles en nombre différent de 3, soit 4, 5, 6 ou plus, l'accroissement du nombre d'étincelles permettant d'accroître en proportion la "robustesse" du procédé.

Aussi, le processus "d'apprentissage" selon l'invention de la valeur optimale de l'instant d'ouverture de l'injecteur peut être exécuté en réglant, dans un premier temps, l'écart (angulaire ou temporel) séparant deux étincelles successives de la série d'étincelles, à une valeur assez grande pour couvrir un large domaine de variations de cet instant d'ouverture.

D'autres séries d'étincelles peuvent ensuite être émises, lors de phases de combustion ultérieures, présentant un "pas" de plus en plus petit, permettant de préciser la position de l'instant d'ouverture optimale.

Un résultat équivalent peut être obtenu en émettant tout d'abord une série d'un grand nombre d'étincelles rapprochées et en répétant l'émission en supprimant progressivement les étincelles émises hors de la phase de combustion proprement dite.

Encore, on peut préciser aussi bien l'instant d'initiation de la combustion que l'instant où celle-ci se termine, en observant le signal délivré par le capteur 8, ou le courant circulant dans la bougie 2 comme on l'a vu plus haut. En évaluant ainsi avec précision la durée de la combustion, on peut accéder à une estimation plus précise du couple délivré par le moteur, estimation exploitée par des moyens de régulation ou de gestion de ce couple, par des moyens de diagnostic de combustion ou, plus généralement, par tout moyen de gestion du fonctionnement du moteur pouvant tirer parti de cette information.

La présente invention permet encore de faire varier progressivement le couple dans le temps, pour supprimer les à-coups de ce couple lors de changements de rapport dans la boîte de vitesses d'un véhicule automobile propulsé par un moteur à combustion interne, par exemple.

On sait en effet que le couple délivré par un tel moteur varie, toutes choses étant égales par ailleurs, avec la valeur de l'angle d'avance à l'allumage, le graphe de la figure 3 illustrant cette variation, en "cloche" centrée sur la valeur αₒₚₜᵢ. Le couple délivré décroît donc quand l'angle d'avance à l'allumage s'écarte de la valeur αₒₚₜᵢ, par valeurs inférieures ou supérieures. On peut ainsi fixer le couple délivré à une valeur de consigne C_{cons} prédéterminée quelconque, inférieure à Cₘₐₓ, en réglant l'angle d'avance à l'allumage à la valeur α_{cons} correspondante et en substituant cette valeur α_{cons} à la valeur αₒₚₜᵢ dans le procédé de réglage de l'instant d'ouverture des injecteurs selon la présente invention. L'angle α_{cons} sera choisi de préférence plus petit que αₒₚₜᵢ, pour éviter des problèmes d'instabilité de combustion (cliquetis, etc...) que l'on rencontre avec des angles d'avance à l'allumage supérieurs à αₒₚₜᵢ.

Bien entendu l'invention n'est pas limitée au mode de réalisation décrit et représenté qui n'a été donné qu'à titre d'exemple. C'est ainsi que, bien que l'invention soit décrite ci-dessus dans le contexte d'un moteur à combustion interne à injection directe et combustion stratifiée, celle-ci s'appliquerait tout aussi bien à un moteur à injection directe et combustion homogène.

## Revendications

1. Procédé de réglage de l'instant d'ouverture d'un injecteur de carburant (3) dans au moins un (1) des cylindres d'un moteur à combustion interne à injection directe, remarquable en ce que :
a) on émet une série d'étincelles dans ledit cylindre (1), rempli d'un mélange air/carburant à enflammer, à des instants successifs prédéterminés,
b) on identifie celle desdites étincelles qui initie l'allumage dudit mélange,
c) on évalue l'écart temporel séparant l'instant d'émission de ladite étincelle d'un instant d'allumage prédéterminé propre à assurer la fourniture par ledit moteur d'une puissance mécanique prédéterminée, et
d) on corrige l'instant d'ouverture dudit injecteur de carburant (3) en fonction dudit écart, de manière à initier des allumages ultérieurs du mélange air/carburant dans ledit cylindre (1) audit instant prédéterminé.

2. Procédé conforme à la revendication 1, **caractérisé en ce que** ledit instant d'allumage prédéterminé assure la production d'un couple prédéterminé par ledit moteur.

3. Procédé conforme à la revendication 2, **caractérisé en ce que** ledit couple prédéterminé est le couple maximum délivrable par le moteur, pour un régime (N) et une charge (Ch) donnée de ce moteur.

4. Procédé conforme à l'une quelconque des revendications 1 à 3, **caractérisé en ce que**, lors de phases de combustion successives de mélanges air/carburant dans ledit cylindre, on fait varier le nombre et/ou l'écartement des étincelles desdites séries d'étincelles de manière à préciser progressivement l'instant optimal d'ouverture de l'injecteur.

5. Procédé conforme à l'une quelconque des revendications 1 à 4, **caractérisé en ce qu'**on identifie aussi l'étincelle de la série qui signale la fin de la combustion, pour évaluer la durée totale de la combustion et en déduire une estimation du couple délivré par le moteur.

6. Dispositif pour la mise en oeuvre du procédé conforme à l'une quelconque des revendications 1 à 5, **caractérisé en ce qu'**il comprend:
a) des moyens (2, 6) propres à émettre une série d'étincelles dans ledit cylindre (1) du moteur quand ce cylindre est rempli d'un mélange air/carburant à enflammer,
b) des moyens (8) pour détecter l'inflammation dudit mélange et délivrer un signal correspondant, et
c) des moyens de calcul (5) sensibles audit signal et propres à commander, d'une part, lesdits moyens d'émission de ladite série d'étincelles de manière que lesdits étincelles soient émises à des instants respectifs prédéterminés et, d'autre part, l'instant d'ouverture dudit injecteur (3) de carburant dans ledit cylindre (1) du moteur, en fonction des informations contenues dans ledit signal.

7. Dispositif conforme à la revendication 6, **caractérisé en ce que** lesdits moyens de détection (8) sont constitués par un organe du groupe formé par: un capteur de pression, un détecteur d'ionisation, un organe de mesure d'un courant de "relecture" dans la bougie (2) dudit cylindre (1).

8. Dispositif conforme à l'une quelconque des revendications 6 et 7, **caractérisé en ce qu'**il fait partie de moyens de gestion du fonctionnement d'un moteur à combustion interne à injection directe.

## Claims

1. Method for regulating the opening time of a fuel injector (3) in at least one (1) of the cylinders of a direct-injection internal combustion engine, notable in that:
a) a series of sparks is emitted into said cylinder (1), filled with an air/fuel mixture to be ignited, at predetermined successive times,
b) the one of said sparks that initiates ignition of said mixture is identified,
c) the time difference separating the time of emission of said spark from a predetermined ignition time able to ensure that said engine supplies a predetermined mechanical power is evaluated, and
d) the opening time of said fuel injector (3) is corrected as a function of said difference, so as to initiate subsequent ignitions of the air/fuel mixture in said cylinder (1) at said predetermined time.

2. Method according to claim 1, **characterised in that** said predetermined ignition time ensures that said engine produces a predetermined torque.

3. Method according to claim 2, **characterised in that** said predetermined torque is the maximum torque that the engine can deliver, for a given engine speed (N) and load (Ch).

4. Method according to one of claims 1 to 3, **characterised in that**, during successive phases of combustion of air/fuel mixtures in said cylinder, the number and/or separation of the sparks in said series of sparks is varied so as gradually to define the optimum time for opening the injector.

5. Method according to any one of claims 1 to 4, **characterised in that** the spark in the series that signals the end of combustion is also identified so as to evaluate the total combustion period and from that deduce an estimate of the torque delivered by the engine.

6. Device for implementing the method according to any one of claims 1 to 5, **characterised in that** it comprises:
a) means (2, 6) able to emit a series of sparks into said engine cylinder (1) when this cylinder is filled with an air/fuel mixture to be ignited,
b) means (8) for detecting the ignition of said mixture and delivering a corresponding signal, and
c) calculation means (5) sensitive to said signal and able to control, on the one hand, said means for emitting said series of sparks such that said sparks are emitted at predetermined respective times and, on the other hand, the opening time of said fuel injector (3) in said engine cylinder (1), on the basis of information contained in said signal.

7. Device according to claim 6, **characterised in that** said detection means (8) consist of a part from the group formed of: a pressure sensor, an ionisation detector, a part for measuring a "monitoring" current in the spark plug (2) of said cylinder (1).

8. Device according to any one of claims 6 and 7, **characterised in that** it forms part of the direct-injection internal combustion engine management means.

## Patentansprüche

1. Verfahren zum Einstellen des Zeitpunkts der Öffnung einer Treibstoffeinspritzpumpe (3) in mindestens einem (1) der Zylinder eines direkt eingespritzten Verbrennungsmotors, **dadurch gekennzeichnet, dass**:
a) eine Reihe von Funken in dem Zylinder (1) abgegeben werden, der mit einem zu entzündenden Luft/Treibstoff-Gemisch gefüllt ist, zu vorbestimmten aufeinander folgenden Zeitpunkten,
b) derjenige Funken ermittelt wird, der die Zündung des Gemischs einleitet,
c) der Zeitabstand bestimmt wird, der den Zeitpunkt der Abgabe dieses Funkens von einem vorbestimmten Zündungszeitpunkt trennt, der dazu geeignet ist, die Bereitstellung einer vorbestimmten mechanischen Leistung durch den Motor sicherzustellen, und
d) der Zeitpunkt der Öffnung der Treibstoffeinspritzpumpe (3) in Abhängigkeit von diesem Abstand korrigiert wird, sodass die nachfolgenden Zündungen des Luft/Treibstoff-Gemischs in dem Zylinder (1) zu dem vorbestimmten Zeitpunkt eingeleitet werden.

2. Verfahren nach Anspruch 1, **dadurch gekennzeichnet, dass** der vorbestimmte Zündzeitpunkt die Erzeugung eines vorbestimmten Drehmoments durch den Motor sicherstellt.

3. Verfahren nach Anspruch 2, **dadurch gekennzeichnet, dass** das vorbestimmte Drehmoment das maximale Drehmoment ist, das von dem Motor bereitgestellt werden kann, bei einer Drehzahl (N) und einer gegebenen Last (La) dieses Motors.

4. Verfahren nach einem der Ansprüche 1 bis 3, **dadurch gekennzeichnet, dass** bei aufeinander folgenden Phasen der Verbrennung von Luft/Treibstoff-Gemischen in dem Zylinder die Anzahl und/oder der Abstand der Funken der Reihen von Funken verändert werden, sodass der optimale Zeitpunkt der Öffnung der Einspritzpumpe nach und nach genau eingestellt wird.

5. Verfahren nach einem der Ansprüche 1 bis 4, **dadurch gekennzeichnet, dass** auch der Funken der Reihe ermittelt wird, der das Ende der Verbrennung anzeigt, um die Gesamtdauer der Verbrennung zu bestimmen und daraus eine Ermittlung des vom Motor bereitgestellten Drehmoments abzuleiten.

6. Vorrichtung zum Verwenden des Verfahrens nach einem der Ansprüche 1 bis 5, **dadurch gekennzeichnet, dass** diese umfasst:
a) Mittel (2, 6), die dazu geeignet sind, eine Reihe von Funken in dem Zylinder (1) des Motors abzugeben, wenn der Zylinder mit einem zu entzündenden Luft/Treibstoff-Gemisch gefüllt ist,
b) Mittel (8) zum Erfassen der Zündung des Gemischs und zum Bereitstellen eines entsprechenden Signals, und
c) Mittel zum Berechnen (5), die für das Signal empfindlich und dazu geeignet sind, einerseits die Mittel zum Abgeben der Reihe von Funken zu steuern, sodass die Funken zu jeweils vorbestimmten Zeitpunkten abgegeben werden, und andererseits den Zeitpunkt der Öffnung der Treibstoffeinspritzpumpe (3) in dem Zylinder (1) des Motors zu steuern, in Abhängigkeit von den Informationen, die in dem Signal enthalten sind.

7. Vorrichtung nach Anspruch 6, **dadurch gekennzeichnet, dass** die Mittel zum Erfassen (8) ein Element der Gruppe umfassen, das gebildet ist aus: einem Drucksensor, einem Ionisationsdetektor, einem Messelement zum erneuten "Lesen" eines Stroms in der Kerze (2) des Zylinders (1).

8. Vorrichtung nach einem der Ansprüche 6 und 7, **dadurch gekennzeichnet, dass** sie Teil von Mitteln zum Steuern des Betriebs eines direkt eingespritzten Verbrennungsmotors ist.
